# EUROPÄISCHE PATENTSCHRIFT

(11) **EP 0 827 985 B1**
(45) Veröffentlichungstag und Bekanntmachung des Hinweises auf die Patenterteilung: **22.11.2000**
(21) Anmeldenummer: 97114242.7
(22) Anmeldetag: 18.08.1997
(51) Int. Cl.: C09B 47/26, D21H 21/28, C09D 11/00

(54) **Wasserlösliche Kupferphthalocyanin-Farbstoffe, ihre Herstellung und Verwendung**
Water soluble copper phthalocyanine dyes, their manufacture and their use
Colorants de phtalocyanine de cuivre, leur fabrication et leur utilisation

(30) Priorität: 26.08.1996 DE 19634354
(43) Veröffentlichungstag der Anmeldung: 11.03.1998
(73) Patentinhaber: Clariant GmbH, 65929 Frankfurt am Main (DE)
(72) Erfinder: Bauer, Wolfgang, Dr., 63477 Maintal (DE); Baumgart, Dieter, Dr., 63329 Egelsbach (DE); Zöller, Walter, 63911 Klingenberg (DE); Kreutzer, Klaus-Peter, 61130 Nidderau (DE)

(56) Entgegenhaltungen:
- EP-A- 0 024 677
- EP-A- 0 596 383
- FR-A- 1 117 562
- FR-A- 2 316 297
- GB-A- 1 490 820
- DATABASE WPI Section Ch, Week 8936 Derwent Publications Ltd., London, GB; Class A97, AN 89-260978 XP002049507 & JP 01 190 770 A (RICOH KK) , 31.Juli 1989
- PATENT ABSTRACTS OF JAPAN vol. 014, no. 080 (C-0689), 15.Februar 1990 & JP 01 297468 A (NIPPON KAYAKU CO LTD), 30.November 1989,

## Beschreibung

Die vorliegende Anmeldung betrifft wasserlösliche Kupferphthalocyanin-Farbstoffe, Verfahren zu ihrer Herstellung, ihre Verwendung zum Färben und Bedrucken von natürlichen und synthetischen Fasermaterialien, Aufzeichnungsflüssigkeiten, insbesondere für das Tintenstrahl- oder Ink-Jet-Verfahren und Flüssigeinstellungen für die Papiermassefärbung, die die erfindungsgemäßen Farbstoffe enthalten.

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das zu bedruckende Medium gespritzt werden. Um Drucke hoher Qualität, d. h. hoher Schärfe und Klarheit zu erhalten, müssen an die dazu verwendeten Aufzeichnungsflüssigkeiten bzw. Farbstoffe hohe Anforderungen beispielsweise hinsichtlich Reinheit, Partikelfreiheit, Viskosität, Oberflächenspannung und Korrosivität bzw. hinsichtlich Löslichkeit, Farbstärke und Echtheit gestellt werden.

Das Tintenstrahl- oder Ink- Jet-Verfahren und die Anforderungen an die hierbei verwendeten Aufzeichnungsflüssigkeiten sind z. B. beschrieben in: Kirk-Othmer, Encyclopedia of Chemical Technology, 3rd Edition, Vol. 20 ( 1982 ), 153 - 156; Ullmann's Encyclopedia of Industrial Chemistry, 5th Edition, Vol A 13 ( 1989 ), 588 - 594; R. W. Kenyon, in P. Gregory, Chemistry and Technology of Printing and Imaging Systems, Blackie & Professional, London, 1996.

An Farbstoffe zum Färben von Papier oder Zellstoffen in der Masse werden hohe Anforderungen hinsichtlich Substantivität bzw. Affinität zur Cellulosefaser, aber auch hinsichtlich Farbstärke und Echtheitseigenschaften gestellt.

Wasserlösliche Kupferphthalocyanin-Farbstoffe sind bereits bekannt, weisen allerdings für die oben genannten Verwendungszwecke zum Teil erhebliche Nachteile auf. Beispielsweise sind C. I. Direct Blue 199, sowie die in DE-A 34 11 476, EP-A 649889 und JP 1,190,770 genannten Farbstoffe für die Verwendung in Aufzeichnungsflüsigkeiten hinsichtlich Wasserechtheit und Abriebfestigkeit nicht optimal.

C. I. Direct Blue 199, sowie die in EP-A 596383, US 4,379,710, SU 491673 und JP 1,319,517 genannten Farbstoffe weisen Nachteile beim Färben von Papier oder Zellstoffen in der Masse auf, weil beispielsweise ihre Affinität zur Cellulosefaser, sowie ihre Farbausbeute nicht ausreichend sind. Dadurch findet sich ein Teil der Farbstoffe im Färbereiabwasser wieder, was aus wirtschaftlichen und ökologischen Gründen nachteilig ist.

Es besteht somit Bedarf an Farbstoffen, die die genannten Nachteile nicht aufweisen und den bekannten Farbstoffen somit überlegen sind.

Überraschenderweise wurde nun gefunden, daß die gestellten Anforderungen von bestimmten wasserlöslichen Kupferphthalocyanin-Farbstoffen erfüllt werden.

Die vorliegende Erfindung betrifft somit wasserlösliche Kupferphthalocyanin-Farbstoffe der allgemeinen Formel 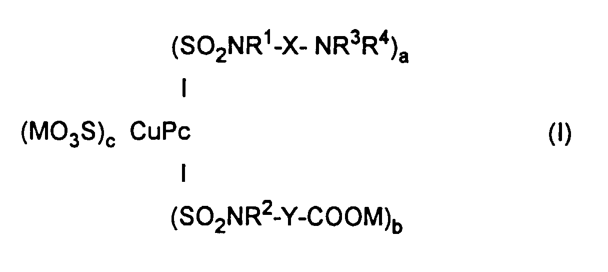 worin
- CuPc: für einen Kupferphthalocyanin-Rest;
- X: für ein geradkettiges oder verzweigtes Alkylen mit 2 bis 6 C-Atomen;
- Y: für ein geradkettiges oder verzweigtes Alkylen mit 1 bis 6 C-Atomen oder ein durch Hydroxy, Carboxy oder Amino substituiertes geradkettiges oder verzweigtes Alkylen mit 1 bis 6 C-Atomen;
- R¹, R²: unabhängig voneinander für Wasserstoff oder Alkyl mit 1 bis 4 C-Atomen;
- R³: für Wasserstoff, Alkyl mit 1 bis 4 C-Atomen, Hydroxyalkyl mit 1 bis 4 C-Atomen oder Aminoalkyl mit 1 bis 4 C-Atomen;
- R⁴: für Wasserstoff oder Alkyl mit 1 bis 4 C-Atomen;
- M: für ein einwertiges Kation oder ein Äquivalent eines mehrwertigen Kations;
- a, b: unabhängig voneinander für 1 oder 2 und
- c: für 0 oder 1
stehen,wobei die Summe a + b + c = 3 oder 4 beträgt.

X bedeutet beispielsweise Ethylen, 1,2-Propylen, 1,3-Propylen, 2,2-Dimethyl-1,3-propylen, 1,6-Hexylen, 1,4-Butylen oder 1,4-Pentylen. Bevorzugt steht X für Alkylen mit 2 bis 4 C-Atomen.

Y bedeutet beispielsweise Methylen, Ethylen, Ethan-1,1-diyl, Propan-1,1-diyl, 1,2-Propylen, Hexylen, 2-Methylpropan-1,1-diyl, 3-Methylbutan-1,1-diyl, 2-Methylbutan-1,1-diyl, 2-Hydroxyethan-1,1-diyl, Propansäure-3,3-diyl, Butansäure-4,4-diyl, 5-Aminopentan-1,1-diyl, 3-Aminopropan-1,1-diyl oder 4-Aminobutan-1,1-diyl.

R¹ und R² bedeuten beispielsweise unabhängig voneinander Wasserstoff, Methyl oder Ethyl. Bevorzugt bedeuten R¹ und R² Wasserstoff.

R³ bedeutet beispielsweise Wasserstoff, Methyl, Ethyl, 2-Aminoethyl oder 2-Hydroxyethyl. Bevorzugt bedeutet R³ Wasserstoff oder Alkyl, Hydroxyalkyl oder Aminoalkyl mit jeweils 1 oder 2 C-Atomen.

R⁴ bedeutet bevorzugt Wasserstoff, Methyl oder Ethyl.
M steht bevorzugt für ein Lithium-, Natrium-, Kalium- oder Ammoniumion oder für ein Ammoniumion der allgemeinen Formel II

R⁵R⁶R⁷R⁸N^{⊕} (II)

in der R⁵, R⁶, R⁷ und R⁸ unabhängig voneinander Wasserstoff, unsubstituiertes (C₁-C₄)-Alkyl oder durch eine oder mehrere Hydroxy- oder 2-Hydroxethoxy-Gruppen substituiertes (C₁-C₄)-Alkyl bedeuten. M steht darüberhinaus bevorzugt für eine Mischung der genannten Kationen.

Die Summe a + b + c beträgt bevorzugt 4, wobei besonders bevorzugt a und b jeweils für 2 und c für 0 stehen.

Die erfindungsgemäßen Kupferphthalocyanin-Farbstoffe der allgemeinen Formel I können beispielsweise dadurch hergestellt werden, daß man Kupferphthalocyaninsulfochloride der allgemeinen Formel III

CuPc(SO₂Cl)_{z} (III)

worin z = 3 oder 4 bedeutet, mit Alkylendiaminen der allgemeinen Formel IV

R¹HN-X-NR³R⁴ (IV)

worin R¹, R³, R⁴ und X wie oben angegeben definiert sind und Aminoalkylencarbonsäuren der allgemeinen Formel V

R²HN-Y-COOH (V)

worin R² und Y wie oben angegeben definiert sind, bei pH-Werten von 7 bis 14 umsetzt.

Die Kupferpthalocyaninsulfochloride der allgemeinen Formel III werden mit den Alkylendiaminen der allgemeinen Formel IV bzw. den Aminoalkylencarbonsäuren der allgemeinen Formel V bevorzugt im Molverhältnis 1 : 1 bis 1 : 2, besonders bevorzugt im Molverhältnis 1 : 2 umgesetzt. Gegebenfalls nicht umgesetzte Sulfochloridgruppen werden unter den alkalischen Reaktionsbedingungen zu Sulfonsäuregruppen verseift.

Die Umsetzung wird bevorzugt im wäßrigen Medium bei pH-Werten von 8 bis 11, und Temperaturen von - 10 °C bis 120 °C, vorzugsweise von 5 °C bis 60 °C, durchgeführt.

Die Verbindungen der allgemeinen Formeln III, IV und V sind bekannt und können im Handel erworben oder nach dem Fachmann bekannten Methoden hergestellt werden.

Als Alkylendiamine der allgemeinen Formel IV können nach dem erfindungsgemäßen Verfahren beispielsweise Ethylendiamin, 1,2-Propylendiamin, 1,3-Propylendiamin, 2,2-Dimethyl-1,3-propylendiamin, 1,6-Hexylendiamin, N-Ethyl-ethylendiamin, N-Methyl-1,3-propylendiamin, N,N-Diethyl-ethylendiamin, 3-Dimethylaminopropylamin, 3-Diethylaminopropylamin, N,N-Diethyl-1,4-pentandiamin, Diethylentriamin, N-(2-Aminoethyl)-1,3-propylendiamin, Dipropylentriamin, N,N-Dimethyl-dipropylentriamin oder N-(2-Aminoethyl)-ethanolamin eingesetzt werden.

Als Aminoalkylencarbonsäuren der allgemeinen Formel V können nach dem erfindungsgemäßen Verfahren beispielsweise Glycin, N-Methylglycin, 2-Aminopropionsäure, 3-Aminopropionsäure, 2-Aminobuttersäure, 3-Aminobuttersäure, 6-Aminohexancarbonsäure, Valin, Leucin, Isoleucin, Serin, Asparaginsäure, Glutaminsäure, Lysin, 1,3-Diaminobuttersäure oder 1,4-Diaminopentancarbonsäure eingesetzt werden.

Die erfindungsgemäßen Kupferphthalocyanin- Farbstoffe der allgemeinen Formel I können aus den zunächst erhaltenenen, bevorzugt wäßrigen Reaktionsgemischen durch übliche Aufarbeitungsmethoden, beispielsweise durch Aussalzen, Filtrieren oder durch Sprühtrocknung, gegebenenfalls nach Entsalzung mittels Membranfiltration, isoliert werden.

Es kann jedoch auch auf eine Isolierung verzichtet und die, die erfindungsgemäßen Farbstoffe der allgemeinen Formel I enthaltende, Reaktionsmischung durch Zusatz von organischen und/oder anorganischen Basen und/oder hydrotropen Mitteln direkt in konzentrierte Farbstoff-Lösungen übergeführt werden.

Als anorganische oder organischen Basen kommen beispielsweise Lithiumhydroxid, Lithiumcarbonat, Natriumhydroxid, Natriumcarbonat, Natiumhydrogencarbonat, Kaliumhydroxid, Kaliumcarbonat, Ammoniak sowie organische Amine, beispielsweise Monoethanolamin, Diethanolamin, Triethanolamin, 2-Aminopropanol, 3-Aminopropanol, Dipropanolamin, Tripropanolamin, N-Methylethanol, N,N-Dimethylethanol, N-Phenylpropanol, Ethylendiamin, Tetramethylethylendiamin, Tetramethylpropylendiamin, Tetramethylhexylendiamin, Diethylentriamin, Triethylentetramin oder Polyethylenimin in Betracht.

Als hydrotrope Verbindungen können beispielsweise Formamid, Harnstoff, Tetramethylhamstoff, ε-Caprolactam, Ethylenglycol, Diethylenglykol, Triethylenglykol, Polyethylenglykol, Propylenglykol, Dipropylenglykol, Polypropylenglykol, Butylglykol, Methylcellusolve, Glycerin, N-Methylpyrrolidon, 1,3-Diethyl-2-imidazolidinon, Natrium-Xylol-sulfonat, Natrium-Cumolsulfonat oder Natrium-Butylmonoglykolsulfat eingesetzt werden.

Gegenstand der vorliegenden Erfindung ist auch die Verwendung von wasserlöslichen Kupferphthalocyanin-Farbstoffen der allgemeinen Formel I zum Färben und Bedrucken von natürlichen oder synthetischen Fasermaterialien, insbesondere zum Aufzeichnen von Schrift und Bildern auf verschiedenen Aufzeichnungsmaterialien, sowie zum Färben von Papier oder Zellstoffen in der Masse.

Die erfindungsgemäßen Farbstoffe der allgemeinen Formel I eignen sich insbesondere hervorragend zur Herstellung von Aufzeichnungsflüssigkeiten, insbesondere von Tinten für das Tintenstrahl- oder Ink-Jet-Verfahren, aber auch für sonstige Druck-, Vervielfältigungs-, Markierungs-, Schreib-, Zeichen-, Stempel- oder Registrierverfahren. Dabei werden türkisblaue Druckbilder von ausgezeichneter Qualität erhalten, die sich durch eine sehr gute Brillanz und Druckschärfe sowie durch eine hohe Lichtechtheit, Abriebfestigkeit und Wasserechtheit, auch auf normalen, nicht beschichteten Papiersorten auszeichnen. Die Verbindungen der allgemeinen Formel I sind somit sowohl C. I. Direct Blue 199, als auch den in DE-A 34 11 476, EP-A 649889 und JP 1,190,770 genannten Farbstoffen überlegen.

Gegenstand der vorliegenden Erfindung sind auch Aufzeichnungsflüssigkeiten, die dadurch gekennzeichnet sind, daß sie eine oder mehrere wasserlösliche Kuperphthalocyanin-Farbstoffe der allgemeinen Formel I enthalten. Die Herstellung von solchen Aufzeichnungsflüssigkeiten erfolgt nach an sich bekannten Verfahren. Angaben über Zusammensetzungen, insbesondere auch solchen von Tinten für das Tintenstrahldruckverfahren, finden sich z. B. in DE-A-21 32 324, DE-A-21 60 475, US-A-4 024 096, US-A-4 024 397 und US-A-4 070 322. Die genaue Zusammensetzung der Aufzeichnungsflüssigkeit wird selbstverständlich dem beabsichtigten Verwendungszweck angepaßt.

Die fertigen Aufzeichnungsflüssigkeiten enthalten im allgemeinen insgesamt 0,5 bis 15 Gew.-% (trocken gerechnet) eines oder mehrerer löslicher Farbstoffe der allgemeinen Formel 1,0 bis 99 Gew.-% Wasser und 0,5 bis 99,5 Gew.-% Lösungsmittel und/oder Feuchthaltemittel. In einer bevorzugten Ausführungsform enthalten die fertigen Aufzeichnungsflüssigkeiten 0,5 bis 15 Gew.-% Farbstoff (trocken gerechnet), 40 bis 85 Gew.-% Wasser und 10 bis 50 Gew.-% Lösungsmittel und/oder Feuchthaltemittel, in einer anderen bevorzugten Ausführungsform 0,5 bis 15 Gew.-% Farbstoff (trocken gerechnet), 0 bis 20 Gew.-% Wasser und 70 bis 99,5 Gew.-% Lösungsmittel und/oder Feuchthaltemittel. Die fertigen Aufzeichnungsflüssigkeiten enthalten in der Regel noch weitere, nachstehend erwähnte Zusätze.

Zur Herstellung der Aufzeichnungsflüssigkeiten benutztes Wasser wird vorzugsweise in Form von destilliertem oder entsalztem Wasser eingesetzt. Bei dem in den Aufzeichnungsflüssigkeiten enthaltenen Lösungsmittel und/oder Feuchthaltemittel kann es sich um ein organisches Lösungsmittel oder um ein Gemisch derartiger Lösungsmittel handeln, wobei es bevorzugt ist, wasserlösliche Lösungsmittel einzusetzen. Geeignete Lösungsmittel sind z. B. ein- und mehrwertige Alkohole, deren Ether und Ester, so z. B. Alkanole, insbesondere mit 1 bis 4 C-Atome, wie z. B. Methanol, Ethanol, Propanol, Isopropanol, Butanol, Isobutanol, tert.-Butanol; zwei- und dreiwertige Alkohole, insbesondere solche mit 2 bis 6 C-Atomen, z. B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol; Polyalkylenglykole, wie z. B. Triethylenglykol, Polyethylenglykol, Tripropylenglykol, Polypropylenglykol; niedere Alkylether von mehrwertigen Alkoholen, wie z. B. Ethylenglykol-mono-methyl- oder -ethyl- oder -propyl- oder-butyl-ether, Diethylenglykol-mono-methyl- oder -ethyl-ether, Triethylenglykol-mono-methyl- oder -ethyl-ether; Ketone und Ketoalkohole, insbesondere solche mit 3 bis 7 C-Atomen, wie z. B. Aceton, Methylethylketon, Diethylketon, Methylisobutylketon, Methylpentylketon, Cyclopentanon, Cyclohexanon, Diacetonalkohol; Ether, wie z. B. Dibutylether, Tetrahydrofuran, Dioxan; Ester, wie z. B. Ethylformiat, Methylformiat, Methylacetat, Ethylacetat, Propylenacetat, Butylacetat, Phenylacetat, Ethylenglykol-mono-ethylether-acetat, Essigsäure-2-hydroxyethylester; Amide, wie z. B. Dimethylformamid, Dimethylacetamid, N-Methylpyrrolidon; ferner Harnstoff, Tetramethylharnstoff, Thiodiglykol.

Von den vorgenannten Substanzen wirken einige nicht nur als Lösungsmittel, sondern entfalten auch noch andere Eigenschaften. So wirken z. B. die mehrwertigen Alkohole auch als Feuchthaltemittel.

Weiter können die Aufzeichnungsflüssigkeiten übliche Zusatzstoffe enthalten, z. B. Konservierungsmittel, wie z. B. Phenol-Derivate, kationische, anionische oder nichtionische oberflächenaktive Substanzen (Netzmittel), sowie Mittel zur Regulierung der Viskosität, z. B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z. B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind in der Regel zu 0 bis 10 Gew.-%, vorzugsweise 0,5 bis 5 Gew.-% in der Aufzeichnungsflüssigkeit vorhanden.

Bei Aufzeichnungsflüssigkeiten für das Tintenstrahl-Druckverfahren können je nach der Ausführungsform dieses Druckverfahrens, z. B. als Continuous-jet-, Intermittent-jet-, Impulse-jet- oder Compound-jet-Verfahren, gegebenenfalls noch weitere Additive, z. B. zur Pufferung des pH-Wertes, zur Einstellung der elektrischen Leitfähigkeit, der spezifischen Wärme, des thermischen Expansionskoeffizienten und der Leitfähigkeit zugesetzt werden.

Die Aufzeichnungsflüssigkeiten lassen sich in einfacher Weise durch Vermischen der Komponenten herstellen, was z. B. so erfolgen kann, daß ein oder mehrere Farbstoffe der allgemeinen Formel I in Wasser und/oder Lösungsmittel gelöst werden oder auch so, daß eine bei der Herstellung des Farbstoffs der allgemeinen Formel I anfallende wäßrige Lösung gegebenenfalls nach geeigneter Vorbereitung im gewünschten Maße verdünnt wird, und daß dann weitere Komponenten, wie Wasser, Lösungsmittel, Zusatzstoffe etc., zugemischt werden.

Bei der Lagerung erfindungsgemäßer Aufzeichnungflüssigkeiten tritt keine Abscheidung von Niederschlägen auf, die zu unscharfen Druckbildern führt. Ferner tritt beim Tintenstrahldruck beim Einsatz der erfindungsgemäßen Tinten keine Verstopfung der Düsen auf. Es treten auch keine Änderungen der physikalischen Eigenschaften erfindungsgemäßer Tinten ein, wenn sie in einem Tintenstrahldrucker längere Zeit unter ständiger Rezirkulation oder intermittierend unter zwischenzeitiger Abschaltung des Tintenstrahldruckers angewandt werden.

Die erfindungsgemäßen Aufzeichnungsflüsigkeiten liegen hinsichtlich Viskosität und Oberflächenspannung in den für das Tintenstrahl- oder Ink-Jet-Verfahren geeigneten Bereichen. Sie liefern Bilder hoher optischer Dichte. Dabei eignen sie sich zur Aufzeichnung auf verschiedenen Aufzeichnungsmedien und ergeben dabei Druckbilder mit ausgezeichneter Wasserechtheit, Lichtechtheit, Abriebbeständigkeit und Auflösung.

Beim Färben von Papier oder Zellstoffen in der Masse werden mit den erfindungsgemäßen Farbstoffen der Formel I brillante türkisblaue Färbungen erhalten, die sich durch eine hohe Farbstärke und sehr gute Echtheitseigenschaften wie beispielsweise Wasserechtheit, Zylinderechtheit, Ausblutechtheit, Säureechtheit, Alkaliechtheit und Lichtechtheit auszeichnen.

Besonders vorteilhaft ist, daß die erfindungsgemäßen Farbstoffe der allgemeinen Formel I eine hohe Substantivität bzw. Affinität zur Cellulosefaser besitzen, so daß bei der Papierherstellung ökologisch günstige, praktisch farblose Färbereiabwässer anfallen. Die Farbstoffe der allgemeinen Formel I sind somit sowohl C. I. Direct Blue 199, als auch den in EP-A 596383, US 4,379,710, SU 491673 und JP 1,319,517 genannten Farbstoffen überlegen.

Gegenstand der vorliegenden Erfindung sind auch konzentrierte Flüssigeinstellungen für die Papiermassefärbung, die dadurch gekennzeichnet sind, daß sie eine oder mehrere wasserlösliche Kupferphthalocyanin-Farbstoffe der allgemeinen Formel I enthalten. Bevorzugt enthalten die Flüssigeinstellungen für die Papiermassefärbung 0,5 bis 30 Gew.%, besonders bevorzugt 10 bis 20 Gew.% einen oder mehrere Farbstoffe der Formel I. Die erfindungsgemäßen Flüssigeinstellungen können an sich bekannte hydrotope Verbindungen, beispielsweise in einer Menge von 0,5 bis 30 Gew.% enthalten. Geeignete hydrotope Verbindungen sind beispielsweise beschrieben in Melliand 43, 718 (1962), Angew.Chem. 63, 327 (1951), J. Soc. Dyers Col. 1973, 128 und Chemiker-Zeitung 96, 248 (1972).

Die folgenden Beispiele dienen zur Erläuterung der Erfindung, ohne sie einzuschränken.

Bei den Gehaltsangaben handelt es sich um Gewichtsprozente.

### Beispiel 1

a) Herstellung von Kupferphthalocyanin-tetrasulfochlorid
   256,0 g Chlorsulfonsäure werden bei 25 °C vorgelegt und 57,6 g Kupferphthalocyanin eingetragen. Man heizt anschließend auf 135 °C und rührt bis zur Beendigung der Gasentwicklung nach (4 Stunden). Darauf kühlt man auf 80 °C, dosiert im Verlauf von von 2 Stunden 120,1 g Thionylchlorid zu und rührt 4 Stunden bei 80 bis 85 °C nach.
   Das auf 25 °C gekühlt Reaktionsgemisch wird anschließend langsam zu einer Mischung von 150 ml Wasser und 300 g Eis gegeben. Durch zusätzliche Eiszugabe wird die Fällungstemperatur bei 0 bis 5 °C gehalten.
   Anschließend wird die Produktsuspension filtriert und der Filterkuchen mit 2,5 l Eiswasser gewaschen.
   - Ausbeute:: 255,0 g Kupferphthalocyanintetrasulfochlorid, feucht, 38 %ig.
b) 255 g des nach a) hergestellten Kupferphthalocyanintetrasulfochlorids werden in ein Gemisch aus 200 ml Wasser und 200 g Eis eingetragen und durch Zugabe von 13,3 g Natriumhydrogencarbonat auf pH 6,9 gestellt. Anschließend gibt man eine Lösung von 20,4 g 3-Dimethylaminopropylamin in 10 ml Wasser zu, rührt zunächst 1 Stunde bei 5 bis 10 °C nach und gibt dann eine Lösung von 15,0 g Glycin in 15 ml Wasser und 15 ml 10 N Natronlauge zu. Das Reaktionsgemisch wird 1 Stunde bei 5 bis 10 °C, 3 Stunden bei 20 bis 25 °C und 2 Stunden bei 70 °C nachgerührt, wobei der pH-Wert durch Zugabe von 52 g 50 %iger Natronlauge im Bereich 9 bis 9,5 gehalten wird.

Man erhält 796 g einer 15 %igen wäßrigen Lösung des Farbstoffs der Formel

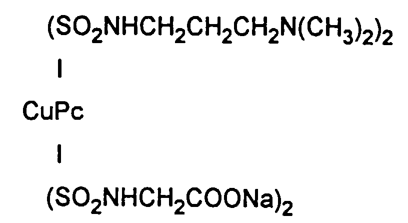

Durch Membranfiltration kann eine salzfreie Lösung dieses Farbstoffs erhalten werden, welche zur Herstellung von Tinten für das Ink-Jet-Verfahren geeignet ist. Absorptionsspektrum in Wasser: λ ₘₐₓ = 607 nm, 670 nm.

### Beispiel 2

796,0 g der nach Beispiel 1b) erhaltenen Farbstofflösung werden mit 60,0 g N-Methylpyrrolidon und 2,0 g eines handelsüblichen Konservierungsmittels versetzt und mit Wasser auf 1020,0 g gestellt. Man erhält eine 12 %ige, lagerstabile Lösung des Farbstoffs, die sich hervorragend zum Färben von Papier in der Masse eignet.

### Beispiel 3

796,0 g der nach Beispiel 1b) erhaltenen Farbstoff-Lösung werden mit 77,0 g 32 %iger Salzsäure auf pH 2,0 gestellt. Der ausgefallene Farbstoff der Formel 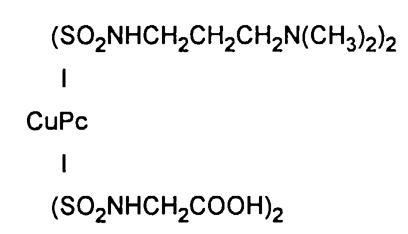 wird abfiltriert und mit 700 ml entsalztem Wasser von 0 bis 5°C gewaschen. Man erhält 314,4 g eines blauen Preßkuchens mit einem Trockengehalt von 35,1 %, der anschließend in 300 ml entsalztes Wasser eingerührt wird und mit 40 ml 5 N Lithiumhydroxid-Lösung bei pH.6,8 gelöst wird. Man erhält 654,4 g einer 18 %igen lagerstabilen Lösung des Farbstoffs der Formel 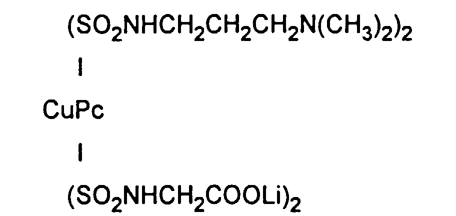 die sich hervorragend zur Herstellung von Tinten und Aufzeichnungsflüssigkeiten für das Ink-Jet-Verfahren eignet.

Nach dem Trocknen der Farbstofflösung werden 104,0 g eines blauen Pulvers mit einem Salzgehalt von < 0,1 % Li₂SO₄ und < 0,1 % LiCl erhalten.

### Vergleichsbeispiel A

255,0 g des nach Beispiel 1a) erhaltenen Kupferphthalocyanintetrasulfochlorids werden in ein Gemisch von 200 ml Wasser und 200 g Eis eingetragen und mit 13,3 g Natriumhydrogencarbonat auf pH 6,9 gestellt. Anschließend gibt man eine Lösung von 15,0 g Glycin in 100 ml Wasser und 20 ml 10 N Natronlauge zu und rührt 1 Stunde bei 5 bis 10 °C, 3 Stunden bei 20 bis 25 °C und 2 Stunden bei 70 °C nach, wobei der pH-Wert der Reaktionsmischung mit 10 N Natronlauge bei pH 9,5 bis 9,7 gehalten wird. Nach Trocknung der Farbstofflösung bei 80 °C i. Vak. erhält man 145,9 g des Farbstoffs der Formel 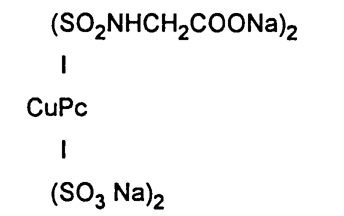 in Form eines blauen Kristallpulvers mit einem Reingehalt von 84 %. Absorptionsspektrum in Wasser: λ ₘₐₓ = 625 nm, 663 nm.

### Vergleichsbeispiel B

255,0 g des nach Beispiel 1a) hergestellten Kupferphthalocyanintetrasulfochlorids werden in ein Gemisch von 200 ml Wasser und 200 g Eis eingetragen und mit 13,3 g Natriumhydrogencarbonat auf pH 6,9 gestellt. Anschließend gibt man 20,4 g 3-Dimethylaminopropylamin in 20 ml Wasser zu und rührt 1 Stunde bei 5 bis 10 °C, 3 Stunden bei 20 bis 25 °C und 2 Stunden bei 70 °C nach, wobei der pH-Wert des Reaktionsgemisches durch Zugabe von 10 N Natronlauge bei pH 9,5 bis 9,7 gehalten.

Die erhaltenen Farbstofflösung wird mit 10 N Salzsäure auf pH 2 gestellt, die ausgefallene Farbstoffsäure durch Filtration isoliert und mit 300 ml 0,1 N Salzsäure gewaschen.

Man erhält 390,0 g eines blauen Filterkuchens (Trockengehalt: 33,0 %), der anschließend in 500 ml entsalztes Wasser eingetragen und mit 39,5 ml 5 N Lithiumhydroxidlösung auf pH 7,5 gestellt wird. Nach Trocknung dieser Farbstofflösung bei 80 °C i. Vak. erhält man 104,0 g des Farbstoffs der Formel 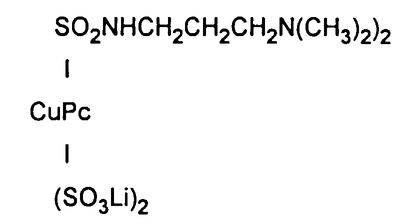 in Form eines blauen Pulvers mit einem Reingehalt von 95 %. Absorptionsspektrum in Wasser: λ ₘₐₓ = 614 nm, 662 nm.

### Beispiel 4

a) Herstellung von Tinten mit 2,5 % Farbstoffgehalt:
Jeweils 2,5 g Reinfarbstoff gemäß Beispiel 3, Vergleichsbeispielen A und B, sowie C. I. Direct Blue 199 werden unter Rühren bei 25 °C in eine Mischung von 20,0 g Diethylenglykol und 77,5 g entsalztes Wasser eingetragen und gelöst.
b) Bestimmung der Wasserechtheit:
Tintenstriche der gemäß a) erhaltenen Tinte werden auf Normalpapier aufgebracht und zwischengetrocknet. Dann werden Wassertropfen aufgebracht (80µl) und 1 Min bzw. 24 Stunden einwirken gelassen. Das Ausbluten wird wie folgt beurteilt:
1 = starkes Ausbluten; 10 = kein Ausbluten.
Die Ergebnisse sind der folgenden Tabelle zu entnehmen:

| **Farbstoff** | **Wasserechtheit (1 Min)** | **Wasserechtheit (24 Stunden)** |
|---|---|---|
| Beispiel 3 | 6 | 6 |
| Vergleichsbeispiel A | 2 | 2 |
| Vergleichsbeispiel B | 2 | 2 |
| CI Direct Blue 199 | 2 | 2 |

### Beispiel 5

Zu einer Mischung aus 5 g gebleichter Cellulose und 250 ml Wasser gibt man unter Rühren jeweils 0,1 g Farbstoff 100 %ig gemäß Beispiel 3 bzw. C. I. Direct Blue 199. Nach einer Reaktionszeit von 5 Min fügt man 0,1g eines handelsüblichen Fixiermittels (®Solidogen FRZ, Hersteller: Hoechst AG) zu. Nach weiteren 5 Min Rühren bildet man auf einem Rapid-Köthen-Blattbildner ein Blatt, das anschließend bei 100 °C getrocknet wird.

Im Vergleich zum Standard-Farbstoff C. I. Direct Blue 199 wird mit dem nach Beispiel 3 erhaltenen Farbstoff eine wesentlich tiefere Färbung erhalten.

Der nach Beispiel 3 erhaltenen Farbstoff zeichnet sich darüberhinaus auch durch eine sehr geringe pH-Empfindlichkeit aus, während sich beim Standard-Farbstoff C. I. Direct Blue 199 in Abhängigkeit vom pH-Wert starke Farbtonänderungen ergeben.

Der folgenden Tabelle sind weitere erfindungsgemäße Farbstoffe zu entnehmen, die nach den Angaben des Beispiels 3 hergestellt werden können.

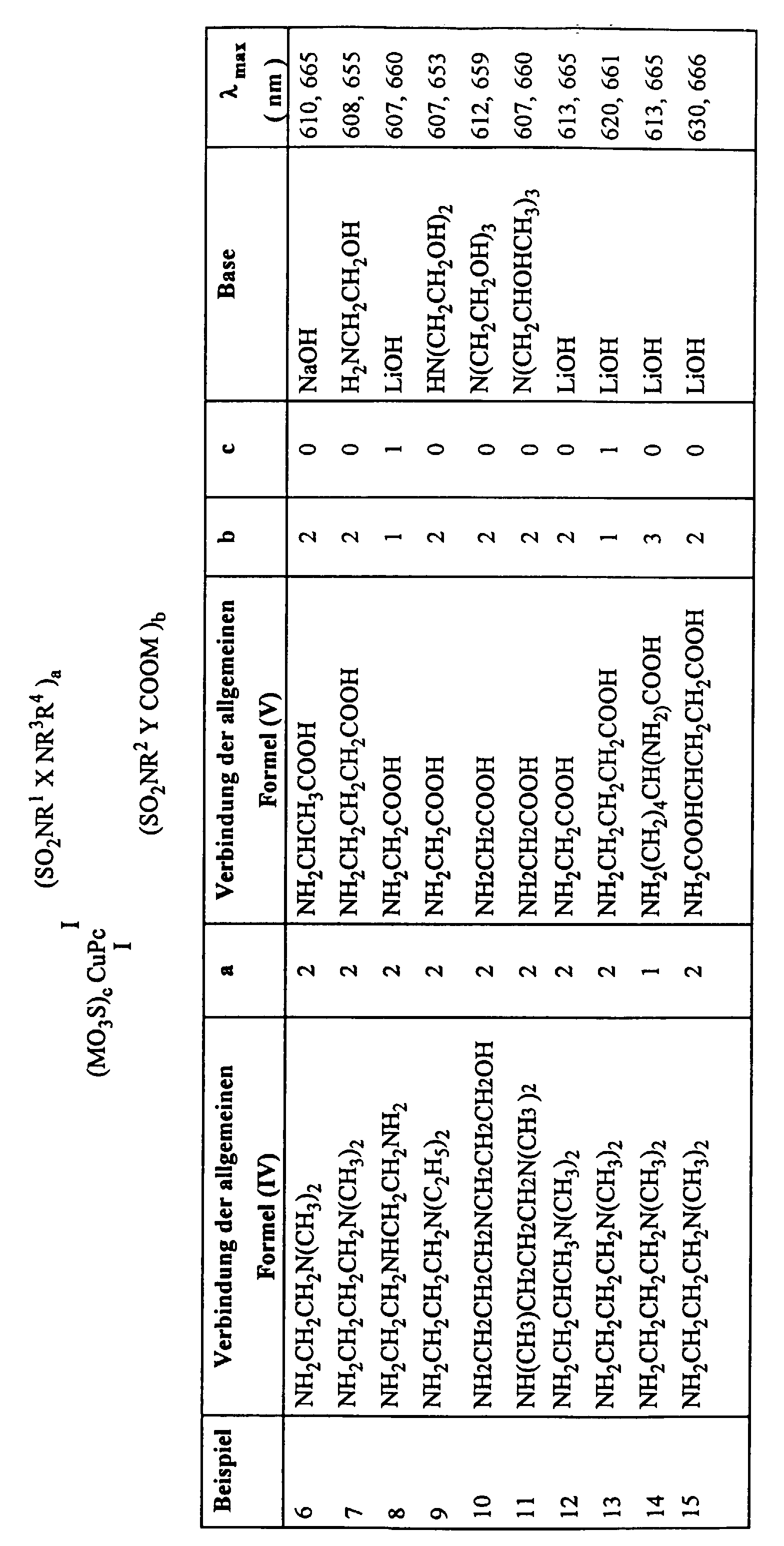

## Patentansprüche

1. Wasserlösliche Kupferphthalocyanin-Farbstoffe der allgemeinen Formel I 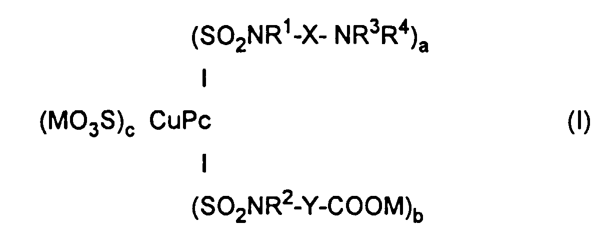 worin
CuPc für einen Kupferphthalocyanin-Rest;
X für ein geradkettiges oder verzweigtes Alkylen mit 2 bis 6 C-Atomen;
Y für ein geradkettiges oder verzweigtes Alkylen mit 1 bis 6 C-Atomen oder ein durch Hydroxy, Carboxy oder Amino substituiertes geradkettiges oder verzweigtes Alkylen mit 1 bis 6 C-Atomen;
R¹, R² unabhängig voneinander für Wasserstoff oder Alkyl mit 1 bis 4 C-Atomen;
R³ für Wasserstoff, Alkyl mit 1 bis 4 C-Atomen, Hydroxyalkyl mit 1 bis 4 C-Atomen oder Aminoalkyl mit 1 bis 4 C-Atomen;
R⁴ für Wasserstoff oder Alkyl mit 1 bis 4 C-Atomen;
M für ein einwertiges Kation oder ein Äquivalent eines mehrwertigen Kations;
a, b unabhängig voneinander für 1 oder 2 und
c für 0 oder 1
stehen,wobei die Summe a + b + c = 3 oder 4 beträgt.

2. Wasserlösliche Kupferphthalocyanin-Farbstoffe gemäß Anspruch 1, dadurch gekennzeichnet, daß X für Alkylen mit 2 bis 4 C-Atomen steht.

3. Wasserlösliche Kupferphthalocyanin-Farbstoffe gemäß Anspruch 1 und/oder 2, dadurch gekennzeichnet, daß R¹ und R² Wasserstoff bedeuten.

4. Wasserlösliche Kupferphthalocyanin-Farbstoffe gemäß einem oder mehreren der Ansprüche 1 bis 3, dadurch gekennzeichnet, daß R³ Wasserstoff oder Alkyl, Hydroxyalkyl oder Aminoalkyl mit jeweils 1 oder 2 C-Atomen und/oder R⁴ Wasserstoff, Methyl oder Ethyl bedeuten.

5. Wasserlösliche Kupferphthalocyanin-Farbstoffe gemäß einem oder mehreren der Ansprüche 1 bis 4, dadurch gekennzeichnet, daß M für ein Lithium-, Natrium-, Kalium- oder Ammoniumion oder für ein Ammoniumion der allgemeinen Formel II
R⁵R⁶R⁷R⁸N^{⊕} (II)
in der R⁵, R⁶, R⁷ und R⁸ unabhängig voneinander Wasserstoff, unsubstituiertes (C₁-C₄)-Alkyl oder durch eine oder mehrere Hydroxy- oder 2-Hydroxyethoxy-Gruppen substituiertes (C₁-C₄)-Alkyl oder für eine Mischung der genannten Kationen steht.

6. Wasserlösliche Kupferphthalocyanin-Farbstoffe gemäß einem oder mehreren der Ansprüche 1 bis 3, dadurch gekennzeichnet, daß a und b jeweils für 2 und c für 0 stehen.

7. Verfahren zur Herstellung wasserlöslicher Kupferphthalocyanin-Farbstoffe gemäß einem oder mehreren der Ansprüche 1 bis 6, dadurch gekennzeichnet, daß man Kupferphthalocyaninsulfochloride der allgemeinen Formel III
CuPc(SO₂Cl)_{z} (III)
worin z = 3 oder 4 bedeutet, mit Alkylendiaminen der allgemeinen Formel IV
R¹HN-X-NR³R⁴ (IV)
worin R¹, R³, R⁴ und X wie in Anspruch 1 angegeben definiert sind und Aminoalkylencarbonsäuren der allgemeinen Formel V
R²HN-Y-COOH (V)
worin R² und Y wie in Anspruch 1 angegeben definiert sind, bei pH-Werten von 7 bis 14 umsetzt.

8. Verwendung von wasserlöslichen Kupferphthalocyanin-Farbstoffen der allgemeinen Formel I gemäß einem oder mehreren der Ansprüche 1 bis 6 zum Färben und Bedrucken von natürlichen oder synthetischen Fasermaterialien, insbesondere zum Aufzeichnen von Schrift und Bildern auf verschiedenen Aufzeichnungsmaterialien, sowie zum Färben von Papier oder Zellstoffen in der Masse.

9. Aufzeichnungsflüssigkeit, dadurch gekennzeichnet, daß sie einen oder mehrere wasserlösliche Kupferphthalocyanin-Farbstoffe der allgemeinen Formel I gemäß einem oder mehreren der Ansprüche 1 bis 6 enthält.

10. Flüssigeinstellung für die Papiermassefärbung, dadurch gekennzeichnet, daß sie einen oder mehrere wasserlösliche Kupferphthalocyanin-Farbstoffe der allgemeinen Formel I gemäß einem oder mehreren der Ansprüche 1 bis 6 enthält.

## Claims

1. A water-soluble copper phthalocyanine dyestuff of the formula I 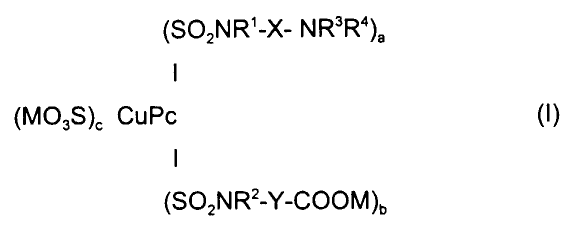 in which
CuPc is a copper phthalocyanine radical;
x is a straight-chain or branched alkylene having 2 to 6 carbon atoms;
Y is a straight-chain or branched alkylene having 1 to 6 carbon atoms or a straight-chain or branched alkylene having 1 to 6 carbon atoms which is substituted by hydroxyl, carboxyl or amino;
R¹ and R² independently of one another are hydrogen or alkyl having 1 to 4 carbon atoms;
R³ represents hydrogen, alkyl having 1 to 4 carbon atoms, hydroxyalkyl having 1 to 4 carbon atoms or aminoalkyl having 1 to 4 carbon atoms;
R⁴ is hydrogen or alkyl having 1 to 4 carbon atoms;
M is a monovalent cation or one equivalent of a polyvalent cation;
a and b independently of one another are 1 or 2 and
c is 0 or 1,
the sum a + b + c being 3 or 4.

2. A water-soluble copper phthalocyanine dyestuff as claimed in claim 1, in which X is alkylene having 2 to 4 carbon atoms.

3. A water-soluble copper phthalocyanine dyestuff as claimed in claim 1 and/or 2, in which R¹ and R² are hydrogen.

4. A water-soluble copper phthalocyanine dyestuff as claimed in one or more of claims 1 to 3, in which R³ is hydrogen or alkyl, hydroxyalkyl or aminoalkyl having in each case 1 or 2 carbon atoms and/or R⁴ is hydrogen, methyl or ethyl.

5. A water-soluble copper phthalocyanine dyestuff as claimed in one or more of claims 1 to 4, in which M is a lithium, sodium, potassium or ammonium ion or an ammonium ion of the formula II
R⁵R⁶R⁷R⁸N^{⊕} (II)
in which R⁵, R⁶, R⁷ and R⁸ independently of one another are hydrogen, unsubstituted (C₁-C₄)-alkyl or (C₁-C₄)-alkyl which is substituted by one or more hydroxyl or 2-hydroxyethoxy groups, or is a mixture of the cations mentioned.

6. A water-soluble copper phthalocyanine dyestuff as claimed in one or more of claims 1 to 3, wherein a and b are each 2 and c is 0.

7. A process for the preparation of a water-soluble copper phthalocyanine dyestuff as claimed in one or more of claims 1 to 6, which comprises reacting a copper phthalocyaninesulfochloride of the formula III
CuPc(SO₂Cl)_{z} (III)
in which z is 3 or 4, with an alkylenediamine of the formula IV
R¹HN-X-NR³R⁴ (IV)
in which R¹, R³, R⁴ and X are defined as stated in claim 1, and an aminoalkylenecarboxylic acid of the formula V
R²HN-Y-COOH (V)
in which R² and Y are defined as stated in claim 1, at pH values of 7 to 14.

8. The use of a water-soluble copper phthalocyanine dyestuff of the formula I as claimed in one or more of claims 1 to 6 for dyeing and printing naturally occurring or synthetic fiber materials, in particular for recording script and images on various recording materials, and for dyeing paper or celluloses in the pulp.

9. A recording liquid which comprises one or more water-soluble copper phthalocyanine dyestuffs of the formula I as claimed in one or more of claims 1 to 6.

10. A liquid formulation for pulp-dyeing of paper, which comprises one or more water-soluble copper phthalocyanine dyestuffs of the formula 1 as claimed in one or more of claims 1 to 6.

## Revendications

1. Colorants cuivre-phtalocyanine hydrosolubles de formule générale I 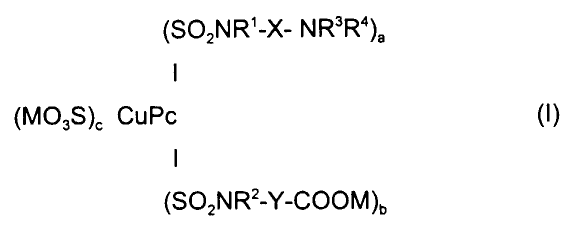 dans laquelle
CuPc représente un radical cuivre-phtalocyanine ;
X représente un alkylène avec 2 à 6 atomes de C, rectiligne ou ramifié ;
Y représente un alkylène avec 1 à 6 atomes de C, rectiligne ou ramifié ou un alkylène avec 1 à 6 atomes de C, rectiligne ou ramifié, substitué par hydroxy, carboxy ou amino ;
R¹, R² représentent, indépendamment l'un de l'autre, hydrogène ou alkyle avec 1 à 4 atomes de C ;
R³ représente hydrogène, alkyle avec 1 à 4 atomes de C, hydroxyalkyle avec 1 à 4 atomes de C ou aminoalkyle avec 1 à 4 atomes de C ;
R⁴ représente hydrogène ou alkyle avec 1 à 4 atomes de C ;
M représente un cation monovalent ou un équivalent d'un cation polyvalent ;
a, b représentent, indépendamment l'un de l'autre, 1 ou 2 et c représente 0 ou 1,
la somme a+b+c étant égale à 3 ou 4.

2. Colorants cuivre-phtatalocyanine hydrosolubles selon la revendication 1, caractérisés en ce que X représente alkylène avec 2 à 4 atomes de C.

3. Colorants cuivre-phtalocyanine hydrosolubles selon la revendication 1 et/ou 2, caractérisés en ce que R¹ et R² représentent hydrogène.

4. Colorants cuivre-phtalocyanine hydrosolubles selon l'une ou plusieurs des revendications 1 à 3, caractérisés en ce que R³ représente hydrogène ou alkyle, hydroxyalkyle ou aminoalkyle avec chacun 1 ou 2 atomes de C et/ou R⁴ représente hydrogène, méthyle ou éthyle.

5. Colorants cuivre-phtalocyanine hydrosolubles selon l'une ou plusieurs des revendications 1 à 4, caractérisés en ce que M représente un ion lithium, sodium, potassium ou ammonium ou un ion ammonium de formule générale II
R⁵R⁶R⁷R⁸N^{⊕} (II)
dans laquelle R⁵, R⁶, R⁷ et R⁸ représentent, indépendamment l'un de l'autre, hydrogène, alkyle en C₁ à C₄ non substitué ou alkyle en C₁ à C₄ substitué par un ou plusieurs groupes hydroxy ou 2-hydroxyéthoxy ou représentent un mélange des cations cités.

6. Colorants cuivre phtalocyanine hydrosolubles selon l'une ou plusieurs des revendications 1 à 3, caractérisés en ce que a et b représentent chacun 2 et c représente 0.

7. Procédé pour la préparation de colorants cuivre-phtalocyanine hydrosolubles selon l'une ou plusieurs des revendications 1 à 6, caractérisé en ce que l'on fait réagir des sulfochlorures de cuivre-phtalocyanine de formule générale III
CuPc(SO₂Cl)_{z} (III)
dans laquelle z = 3 ou 4, avec des alkylènediamines de formule générale IV
R¹HN-X-NR³R⁴ (IV)
dans laquelle R¹, R³, R⁴ et X sont définis comme indiqué à la revendication 1 et des acides aminoalkylènecarboxyliques de formule V
R²HN-Y-COOH (V)
dans laquelle R² et Y sont définis comme indiqué à la revendication 1, à des valeurs de pH de 7 à 14.

8. Utilisation de colorants cuivre-phtalocyanine hydrosolubles de formule générale I selon l'une ou plusieurs des revendications 1 à 6 pour teindre et imprimer des matières fibreuses naturelles ou synthétiques, en particulier pour enregistrer l'écriture et des images sur différents matériaux d'enregistrement, ainsi que pour teindre le papier ou des pâtes à papier ou de cellulose dans la masse.

9. Liquide d'enregistrement, caractérisé en ce qu'il contient un ou plusieurs colorants cuivre-phtalocyanine hydrosolubles de formule générale I selon l'une ou plusieurs des revendications 1 à 6.

10. Composition liquide pour la teinture du papier dans la masse, caractérisé en ce qu'elle contient un ou plusieurs colorants cuivre-phtalocyanine hydrosolubles de formule générale I selon l'une ou plusieurs des revendications 1 à 6.
